Europäisches Patentamt

European Patent Office

Office européen des brevets

(11) Numéro de publication: **0 340 108**

A1

(12) **DEMANDE DE BREVET EUROPEEN**

(21) Numéro de dépôt: **89401185.7**

(22) Date de dépôt: **26.04.89**

(51) Int. Cl.⁴: **A 01 M 29/00**

(30) Priorité: **26.04.88 FR 8805500**

(43) Date de publication de la demande:
**02.11.89 Bulletin 89/44**

(84) Etats contractants désignés:
**BE CH DE ES FR GB IT LI LU NL**

(71) Demandeur: **T.M.C. FRANCE SARL**
**ZI Les Vignes 2 rue Eugène Henaff**
**F-93000 Bobigny (FR)**

(72) Inventeur: **Negre, Gilles**
**21 Rue du Vert Buisson**
**F-60330 Le Plessis Belleville (FR)**

(54) Dispositif pour empêcher le stationnement des volatiles.

(57) Perfectionnements aux dispositifs,pour empêcher le stationnement des volatiles,du genre de ceux comportant une
plaque de support collée contre la surface à protéger et des
picots s'étendant perpendiculairement à ladite plaque caractérisés en ce que la plaque de support (1,7) est lisse sur ses deux
faces et présente des trous (3) dans chacun desquels est
engagée l'extrémité inférieure d'un picot (2) constitué par un
morceau de fil métallique tronçonné, qui y est maintenu par
collage.
Les trous (3) sont disposés de façon à ce que la distance
entre deux picots adjacents soit constante.

Fig.2

Bundesdruckerei Berlin

EP 0 340 108 A1

**Description**

La présente invention est relative à des perfectionnements aux dispositifs pour empêcher le stationnement des volatiles tels que des pigeons.

On sait que dans les grandes villes la prolifération des pigeons a entraîné des nuisances de toutes sortes.

L'un des moyens les plus efficaces pour empêcher que ces volatiles stationnent sur les bâtiments consiste à munir ceux-ci de picots se présentant sous la forme d'aiguilles,judicieusement espacées,dont la longueur est de l'ordre de 100 millimètres et qui empêchent les pigeons de se poser.

Un tel moyen est décrit dans le brevet Français N° 8320857 publié sous le N° 2 556 932.

Selon le dispositif décrit dans ce brevet, les picots sont associés par paire, chaque picot constituant l'une des branches latérales d'un fil cintré en forme d'U dont la partie médiane est conformée pour s'encliqueter sur un ergot prévu sur une plaque de support fixée, par collage, sur la surface à protéger.Chaque paire de picots est située dans un plan perpendiculaire à l'axe de la plaque de support.

Ce dispositif est efficace mais il est très onéreux, tant en ce qui concerne la longueur du fil utilisé, le façonnage de la partie médiane, qui nécessitent l'utilisation de machines spéciales et la réalisation du moule pour obtenir la plaque de support.

La présente invention qui remédie à ces inconvénients est remarquable en ce que le dispositif se compose d'une plaque de support, lisse sur ses deux faces,présentant des trous judicieusement espacés dans chacun desquels on introduit l'extrémité inférieure d'un picot constitué par une tige métallique qui est maintenue en place par collage.

L'invention sera mieux comprise par la description qui va suivre, faite en se référant aux dessins annexés à titre d'exemple indicatif seulement, sur lesquels:

La figure 1 est une vue en perspective d'un dispositif de protection conforme à l'invention;

La figure 2 est une vue analogue à celle 1 montrant une variante de réalisation ;

La figure 3 est une vue partielle en coupe et à plus grande échelle montrant la fixation d'un picot sur une plaque ;

La figure 4 est une vue analogue à la figure 3 montrant une variante de réalisation;

La figure 5 est une vue en perspective montrant le montage du picot de la figure 4;

La figure 6 montre en perspective un crochet permettant de fixer le dispositif de l'invention sur le rebord d'une gouttière usuelle;

La figure 7 est une vue en perspective montrant la fixation du crochet de la figure 6 sur la plaque de support de la figure 2.

En se reportant aux dessins et selon l'invention, on voit que le dispositif de protection se compose d'une plaque de support 1, lisse sur ses deux faces, comportant des picots 2 s'étendant perpendiculairement à la face supérieure de ladite plaque qui est collée . de la façon usuelle, par sa face inférieure sur la surface à protéger.

De préférence, les picots 2 sont disposés selon les sommets de triangles équilatéraux de façon à ce que l'espace entre deux picots adjacents soit constant.

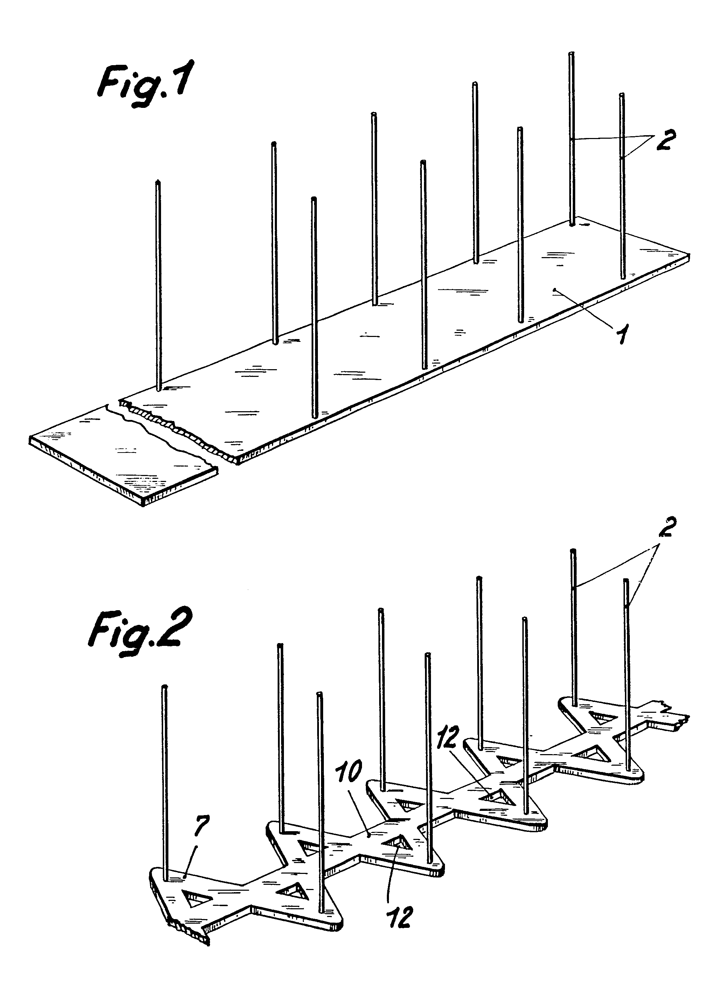

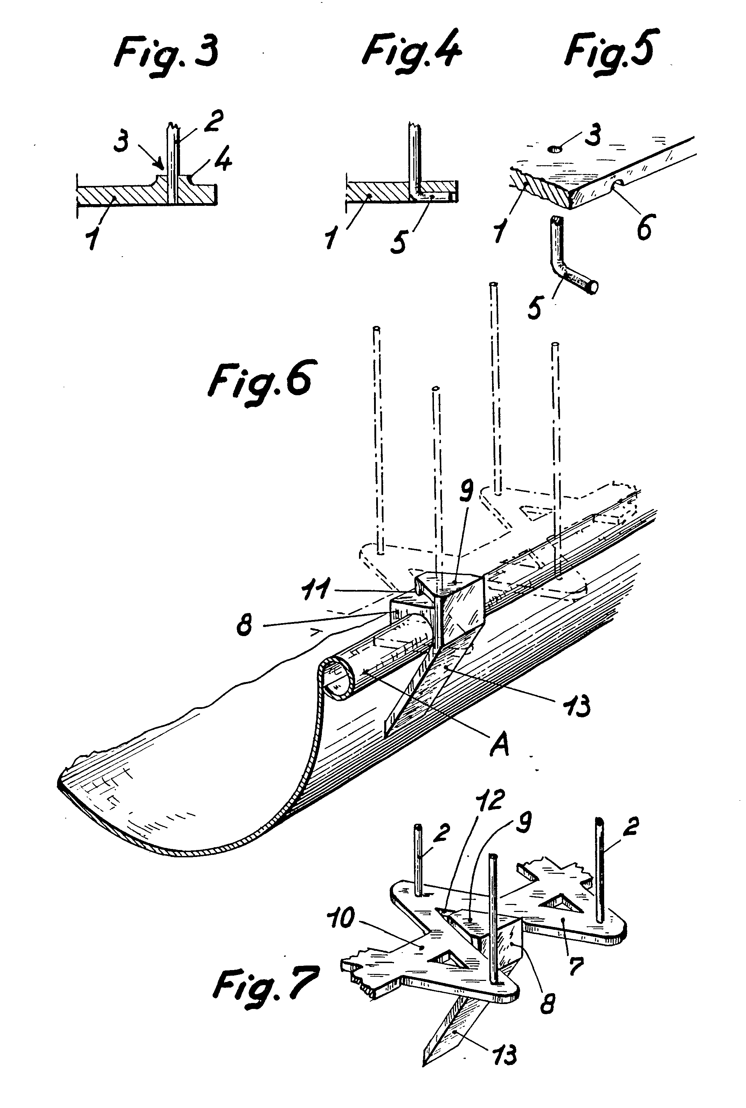

Comme cela ressort,notamment, des figures 1 et 3, les picots sont obtenus à peu de frais par le tronçonnage d'un fil métallique.

La plaque 1 présente des trous 3 dans chacun desquels on engage l'extrémité inférieure de chaque picot qui est maintenu par collage à l'aide d'une colle usuelle.

Comme représenté sur la figure 3,il est possible de réduire l'épaisseur de la plaque 1 si, à l'emplacement de chaque picot,on prévoit un petit bossage 4.

Comme montré sur les figures 4 et 5,on peut améliorer la stabilité des picots en prévoyant à l'extrémité inférieure de ceux-ci une partie recourbée à angle droit 5,ladite partie recourbée se logeant dans une rainure 6 pratiquée sur la face inférieure de la plaque 1 et débouchant dans le trou 3.

La figure 2 montre, en perspective, une plaque de support 7, remplissant les mêmes fonctions que celle 1 mais dont les formes sont étudiées à la fois pour économiser de la matière et pour la rendre moins visible.

Cette plaque 7 est particulièrement adaptée pour permettre sa fixation sur le rebord d'une gouttière comme cela ressort, notamment, des figures 6 et 7.

A cet effet, on utilise un crochet 8, réalisé en une matière élastiquement déformable susceptible de s'encliqueter sur le bord arrondi A d'une gouttière usuelle et affectant,dans ce cas, la forme d'un U à branches refermées.

Au-dessus de la partie médiane du crochet s'étend une patte 9 formant, en combinaison avec ladite partie,une pince entre les ailes de laquelle on peut introduire l'âme centrale 10 de la plaque 7. La patte 9 présente àson extrémité un rebord 11 s'étendant vers le crochet 8 et pouvant pénétrer dans la partie évidée 12 de la plaque 7.

L'aile extérieure du crochet 8 présente une extension 13 susceptible de venir prendre appui contre la gouttière pour assurer le positionnement de la plaque 7.

Bien entendu, la présente invention ne se limite pas au mode de réalisation décrit et représenté mais s'étend, au contraire, à toutes variantes de formes, matières et dimensions.

**Revendications**

1-Perfectionnements aux dispositifs,pour empêcher le stationnement des volatiles,comportant une plaque de support (1, 7) présentant des trous (3) dans chacun desquels est engagée l'extrémité inférieure d'un picot (2) constitué par un morceau de fi métallique tronçonné, qui y est maintenu par collage, caractérisé ce que les trous (3) sont disposés de façon à ce que la distance entre deux picots adjacents soit constante.

2-Perfectionnements aux dispositifs pour empêcher le stationnement des volatiles, selon la revendication 1, caractérisés en ce que l'extrémité inférieure de chaque picot est recourbée à angle droit, la partie recourbée (5) se logeant dans une rainure (6) prévue sur la face inférieure de la plaque et débouchant dans le trou (3) correspondant.

3-Perfectionnements aux dispositifs pour empêcher le stationnement des volatiles, selon l'une quelconque des revendications 1 et 2,caractérisés en ce que la plaque (7) affecte la forme montrée sur la figure 2,c'est-à-dire qu'elle est constituée par une succession de triangles, évidés en leur centre s'étendant alternativement de part et d'autre d'une ame centrale (10).

4- Perfectionnements aux dispositifs pour empêcher le stationnement des volatiles, selon la revendication 3,caractérisé en ce que la fixation du dispositif sur le bord d'une gouttière usuelle s'effectue par l'entremise d'un crochet (8) réalisé en une matière élastiquement déformable dont les branches peuvent enserrer le bord arrondi de la gouttière et comportant une pince dans laquelle s'engage et est maintenue l'âme centrale (10) de la plaque (7).

5-Perfectionnements aux dispositifs pour empêcher le stationnement des volatiles,selon la revendication 4,caractérisés en ce que l'une des branches du crochet (8) présente une extension (13) susceptible de venir prendre appui contre la gouttière.

### Fig.1

### Fig.2

Fig. 3

Fig. 4

Fig. 5

Fig. 6

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | FR-A-1316598 (COHN)<br>* page 1, colonne 1, ligne 1 - page 2, colonne 2, ligne 46 * | 1 | A01M29/00 |
| Y | | 2 | |
| Y | US-A-3282000 (SHAW ET AL.)<br>* colonne 2, ligne 39 - colonne 4, ligne 4; figure 10 * | 2 | |
| A | DE-A-1757735 (NEUBER)<br>* le document en entier * | 1 | |
| A | US-A-2298194 (CALDWELL)<br>* figure 6 * | 1 | |
| A | DE-U-8412524 (NIEWOLLIK)<br>* page 5 * | 4, 5 | |
| D,A | FR-A-2556932 (L'HERMITE ET AL.) | | |

|  | DOMAINES TECHNIQUES RECHERCHES (Int. Cl.4 ) |
|---|---|
|  | A01M<br>E04D |

Le présent rapport a été établi pour toutes les revendications

| Lieu de la recherche | Date d'achèvement de la recherche | Examinateur |
|---|---|---|
| LA HAYE | 10 JUILLET 1989 | VAN OORSCHOT J.W.M. |